# EUROPÄISCHE PATENTSCHRIFT

(11) **EP 1 782 977 B1**
(45) Veröffentlichungstag und Bekanntmachung des Hinweises auf die Patenterteilung: **16.12.2009**
(21) Anmeldenummer: 06022391.4
(22) Anmeldetag: 26.10.2006
(51) Int. Cl.: B60H 1/34

(54) **Luftausströmer**
Air nozzle
Buse d'air

(30) Priorität: 03.11.2005 DE 102005052934
(43) Veröffentlichungstag der Anmeldung: 09.05.2007
(73) Patentinhaber: Behr GmbH & Co. KG, 70469 Stuttgart (DE)
(72) Erfinder: Lang, Matthias, Dr., 70469 Stuttgart (DE)

(56) Entgegenhaltungen:
- DE-A1- 2 902 733
- DE-A1- 3 736 448
- DE-A1- 10 341 735
- DE-A1-102004 011 352

## Beschreibung

Die Erfindung betrifft einen Luftausströmer, insbesondere für ein Kraftfahrzeug, ein Verfahren zur Steuerung einer Luftausströmung eines Luftausströmers, und ein Belüftungssystem für ein Fahrzeug.

Aus der DE 10 2004 038 016 A1 ist ein Luftausströmer zur lnnenbelüftung von Räumen, wie Fahrgasträumen von Straßen- oder Schienenfahrzeugen, bekannt, der in einem ersten Betriebsfall einen gerichteten, strahlförmigen Luftaustritt ("spotförmiger Luftaustritt") mit großer Eindringtiefe und in einem zweiten Betriebsfall einen diffusen Luftaustritt mit möglichst weit aufgefächertem Luftstrahl sowie beliebige, stetig zwischen diesen beiden Betriebsfällen einstellbare Mischbetriebsfälle ermöglicht, so dass sowohl eine schnelle Durchmischung der Raumluft als auch eine gleichmäßige, zugluftfreie Belüftung möglich ist. Der gerichtete, strahlförmige Luftaustritt wird mit einer möglichst gleichförmig gerichteten Rohrströmung, der diffuse Luftaustritt hingegen mittels Impulstransport in normaler Richtung zur Strahlachse durch einen aufgeprägten Drall unter Zuhilfenahme von Luftleitblechen oder einer entsprechend angepassten Geometrie der Luftführung erreicht. Beim genannten Luftausströmer werden diese Stömungen in getrennten Luftkanälen für die unterschiedlichen Betriebsfälle geführt. Notwendigerweise ist hierzu der Aufbau des Luftausströmers relativ komplex. Die Luftführung in mehreren Kanälen führt zu geringeren Querschnitten der Einzelkanäle und damit zu höheren Strömungsgeschwindigkeiten bei großer benetzter Fläche, was wiederum zu mehr Reibung und damit Druckverlusten und akustischen Problemen führt.

Aus der DE 290 27 33, der als nächstliegender Stand der Technik angesehen wird, ist ein Luft- Drallauslass für Klimaanlagen bekannt, welcher Drallschaufeln aufweist, die um radial zur Achse des Auslasses gelagerte Achsen schwenkbar angeordnet sind. Die entsprechenden Schaufeln sind im Wesentlichen um ihre Mitte verstellbar, sodass die Ausströmrichtung der Luft beeinflussbar ist.

Der Erfindung liegt daher die Aufgabe zugrunde, einen verbesserten Luftausströmer für mehrere Betriebsfälle zur Verfügung zu stellen, um die aerodynamischen und akustischen Eigenschaften zu verbessern sowie durch vereinfachten Aufbau die Herstellungskosten zu reduzieren.

Diese Aufgabe wird erfindungsgemäß gelöst durch einen Luftausströmer mit den Merkmalen des Anspruchs 1, Verfahren mit den Merkmalen der Ansprüche 9 und 22, sowie einen Belüftungssystem mit den Merkmalen des Anspruchs 29.

Vorteilhafte Ausgestaltungen der Erfindung sind Gegenstand der Unteransprüche.

Erfindungsgemäß ist ein Luftausströmer mit einem Luft führenden Luftkanal und einer Vorrichtung zur Beeinflussung der Luftströmung vorgesehen, die die Charakteristik des Luftaustritts zwischen mindestens zwei Betriebsfällen - "Spotförmiger Luftaustritt" einerseits und "Diffuser Luftaustritt" andererseits - stetig verstellen kann, wobei für alle Betriebsfälle der gleiche Querschnitt des Luftkanals durchströmbar ist, wobei die Vorrichtung mehrere um jeweils eine zugehörige Achse drehbar gelagerte Luftleitelemente umfasst, wobei die Luftleitelemente aus flexiblem Material bestehen.

Neben der einfacheren Fertigungsmögtichkeit durch den einkanaligen Aufbau ergeben sich weitere Vorteile. Durch die Nutzung des maximalen Querschnitts in allen Betriebsfällen ergeben sich, verglichen mit einem mehrkanaligen Aufbau, geringere benetzte Flächen und geringere Strömungsgeschwindigkeiten und dadurch geringere Druckverluste sowie ein besseres akustisches Verhalten.

In einer weiteren Ausführungsform umfasst der Luftausströmer mindestens zwei Luftkanäle mit jeweils mindestens einer Vorrichtung zur Beeinflussung einer Luftströmung, wobei die Vorrichtung derart ausgestaltet ist, dass sie in einem ersten Betriebsfall einen gerichteten, strahlförmigen Luftaustritt und in einem zweiten Betriebsfall einen diffusen Luftaustritt und stetig verstellbar alle zwischen diesen beiden Betriebsfällen liegenden Betriebsfälle an dem ihr zugehörigen Luftkanal ermöglicht. Mindestens einer der Luftkanäle ist in einem anderen der Luftkanäle angeordnet. Diese Ausführungsform ermöglicht mehr Betriebsfälle, die sich aus den Kombinationen der Betriebsfälle der einzelnen Luftkanäle ergeben, insbesondere wenn die Vorrichtungen verschiedener Luftkanäle unabhängig voneinander verstellbar sind. Insbesondere sind die hydraulischen Durchmesser zweier, ineinander angeordneter Luftkanäle einander gleich. Der hydraulische Durchmesser ist der Quotient aus dem vierfachen Strömungsquerschnitt und dem von der Luftströmung benetzten Umfang des Luftkanals. Bei gleichem hydraulischem Durchmesser kann von gleichen Druckverlusten in beiden Kanälen ausgegangen werden. So ist es beispielsweise auf einfache Weise möglich beim Umschalten der Durchströmung zwischen den Luftkanälen den Durchsatz konstant zu halten.

Zweckmäßigerweise ist der Querschnitt des Luftkanals kreisförmig, da dies der aerodynamisch günstigste Querschnitt ist.

In einer möglichen Ausführungsart ist die Vorrichtung zur Beeinflussung der Luftströmung so ausgeführt, dass sie im Betriebsfall "Diffuser Luftaustritt" Luftwirbel generiert, die am Austritt oder nach einer bestimmten Lauflänge durch Aufplatzen für die Auffächerung des Luftstrahls und so für einen diffusen Luftaustritt sorgen. Hierdurch wird der Klimakomfort verbessert, indem ein möglichst weit aufgefächerter und rasch zerfallender Luftstrom in den Fahrzeuginnenraum geführt wird, so dass eine gute Durchmischung bei Vermeidung von unangenehmen Zugerscheinungen ermöglicht ist.

In einer weiteren Ausführungsart ist die Vorrichtung zur Beeinflussung der Luftströmung so ausgeführt, dass sie im Betriebsfall "Diffuser Luftaustritt" einen Drall generiert, der am Austritt des Luftkanals für ein radiales Aufplatzen der Strömung und so für einen diffusen Luftaustritt sorgt

Erfindungsgemäß umfasst die Vorrichtung zur Beeinflussung der Luftströmung mehrere im Luftstrom drehbar angeordnete Luftleitelemente, um durch deren synchrones Verdrehen einen Drall zu erzeugen. Dabei werden die Luftleitelemente mit jeweils gleichem Drehsinn angestellt.

Zweckmäßigerweise liegen die Achsen der Luftleitelemente in einer gemeinsamen Querschnittsebene des Luftkanals. Mit anderen Worten: Mehrere Luftleitelemente, z. B. Umlenkklappen, sind in Umfangsrichtung des Luftkanais angeordnet. Hierdurch kann eine vorgegebene Strömungscharakteristik erzielt werden. Bevorzugt ergibt sich dadurch auch eine Reduktion der Baulänge.

Die Luftleitelemente werden vorzugsweise als dünne deltaförmige Leitbleche ausgeführt. Hierdurch erfolgt eine kontrollierte Strömungsablösung an deren schrägen Vorderkanten, wie vom Deltaflügel her bekannt. Diese Strömungsablösung erzeugt Längswirbel, die, abhängig vom Anstellwinkel, nach einer gewissen Lauflänge aufplatzen und so für eine verstärkte Auffächerung des Luftstrahls sorgen. Mit zusätzlichen halbdeltaförmigen Elementen, die im maximal angestellten Zustand an der Wandung des Luftkanals anliegen, lässt sich dieser Effekt zusätzlich verbessern. Bevorzugt wird der Luftströmung bei gleichsinniger und/oder synchroner Anstellung der Leitbleche auch ein Drall aufgeprägt.

Erfindungsgemäß werden Luftleitelementen aus flexiblem Material verwendet, die bei entsprechender Formgebung die Möglichkeit bieten, den Luftkanal durch maximales Anstellen in eine Endstellung derart zu verschließen, dass der Luftstrom ganz unterbrochen werden kann. Hierdurch kann eine zusätzliche, vorgeschaltete Luftklappe entfallen. Als flexible Materialien finden beispielsweise Gummi oder Kunststoffe, insbesondereThermoplastische Elastomere, bevorzugt EPDM, SEBS oder ähnliches Verwendung. Als weitere Variante sind als flexible Materialien für die Luftleitelemente dünne Bleche aus Metall oder Federstahl vorgesehen.

Vorzugsweise umfasst die Vorrichtung mehrere flexible, in ihrer äußeren Lagerung drehbar gelagerte und auf diese Weise verwindbare Luftleitelemente, die an einer in Richtung des Luftstroms liegenden Längsachse des Luftkanals oder an einem der anderen, innerhalb angeordneten Luftkanäle fixiert sind. In nicht verwundener Stellung sind diese Luftleitelemente in Hauptströmungsrichtung ausgerichtet, so dass sie die geringstmögliche Querschnittsfläche benötigen und die Strömung nicht beeinflussen, was dem Betriebsfall "Spotförmiger Luftaustritt" entspricht. Um den Luftstrahl für den Betriebsfall "Diffuser Luftaustritt" aufzufächern, werden alle Luftleitelemente bezüglich der Hauptströmungsrichtung durch Drehen der äußeren Lagerung synchron verwunden. Im Luftstrom bildet sich so ein starker Wirbel bzw. Drall aus, der am Austritt aufplatzt und so den Luftstrahl stark auffächert. Durch die Variation der Anstellwinkel der Luftleitelemente kann eine gewünschte Aufweitung des Luftstrahls zwischen den Betriebsfällen "Spotförmiger Luftaustritt" und "Diffuser Luftaustritt" erreicht werden. Die durch Verwinden der Luftleitelemente entstehenden abgerundeten, gebogenen oder gewölbten Konturen verbessern darüber hinaus die akustischen Eigenschaften zusätzlich, da kein Strömungsabriss an eckigen Kanten entsteht, insbesondere bei gerader Anströmung der Kanten.

Ferner kann der Luftausströmer in der Konsole eines Fahrzeugs insbesondere mittels Kugelgelenk oder kardanischer Aufhängung gelagert sein, um einen höheren Komfort durch Schwenkbarkeit des Luftausströmers und damit verbunden des austretenden Luftstrahls zu erzielen.

Werden zwei oder mehrere ineinander angeordnete Luftkanäle verwendet, kommt zur Steuerung des Luftausströmers vorzugsweise ein Verfahren in Betracht, bei dem mittels jeweils mindestens einer Vorrichtung zur Beeinflussung der Luftströmung pro Luftkanal die Luftströmung in jedem der Luftkanäle in einem ersten Betriebsfall mit einem gerichteten, strahlförmigen Luftaustritt und in einem zweiten Betriebsfall mit einem diffusen Luftaustritt in einen Fahrzeuginnenraum geführt wird wobei die Vorrichtung stetig in weitere zwischen diesen beiden Betriebsfällen liegende Betriebsfälle verstellt werden kann, und die Luftströmung in allen Betriebsfällen durch einen gemeinsamen Querschnitt des Luftkanals geführt wird, wobei die Luftleitelemente zur Verstellung der Vorrichtung verwunden werden. Die Vorrichtungen verschiedener Luftkanäle können unabhängig voneinander verstellt werden. Mittels Kombination verschiedener Betriebsfälle der Luftkanäle ist eine größere Variabilität der Ausströmcharakteristik des Luftausströmers realisierbar. Insbesondere werden folgende Kombinationen von Betriebsfällen verwendet:
- Nur dem inneren von zwei ineinander angeordneten Luftkanäle wird Luft zugeführt und die Luftströmung gerichtet aus diesem ausgeströmt. Der äußere Luftkanal erhält keine Luft. Die Luft strömt "spotförmig" in den Fahrzeuginnenraum aus.
- Die Luftströmung wird aus dem inneren Luftkanal gerichtet und aus dem äußeren Luftkanal diffus ausgeströmt. Damit ergibt sich eine Mischcharakteristik zwischen "spotförmig" und diffus.
- Nur dem äußeren Luftkanal wird Luft zugeführt und die Luftströmung diffus aus diesem ausgeströmt. Die Gesamtcharakteristik der ausgeströmten Luftströmung ist diffus.
- Die Luftströmung wird aus dem inneren Luftkanal und aus dem äußeren Luftkanal diffus und mit einem gleichsinnigen Drall behaftet ausgeströmt. Die Gesamtcharakteristik der Luftausströmung ist diffus jedoch mit einem höheren Durchsatz.
- Die Luftströmung wird aus dem inneren Luftkanal und aus dem äußeren Luftkanal diffus und mit einem gegensinnigen Drall behaftet ausgeströmt. Durch den gegenläufigen Drall wird der Strahl der ausgeströmten Luft zusätzlich aufgeweitet, so dass die Gesamtcharakteristik der Luftausströmung besonders diffus ist.
- Die Luftströmung wird aus dem inneren Luftkanal und aus dem äußeren Luftkanal direkt ausgeströmt. Die Gesamtcharakteristik ist "spotförmig", jedoch mit weniger scharfem Luftstrahl. Druckverluste und akustische Beeinträchtigungen sind geringer. Die "Schärfe" des Luftstrahls kann mittels Zugabe von Luft oder Drosselung der Luftzufuhr in den äußeren Luftkanal gesteuert werden.
- Eine Vielzahl weiterer Kombinationen der Betriebsfälle der Luftkanäle ist denkbar.

Ausführungsbeispiele der Erfindung werden anhand einer Zeichnung näher erläutert Darin zeigen:
- Fig. 1: eine schematische Seitenansicht eines Luftausströmers mit einem längs aufgeschnitten dargestellten Luftkanal und Luftleftelementen, die jeweils um eine Achse drehbar gelagert sind, wobei sie sich in der Betriebsstellung "Spotförmiger Luftaustritt" befinden,
- Fig. 2: eine schematische Vorderansicht des in Fig.1 dargestellten Luftausströmers in der Betriebsstellung "Spotförmiger Luftaustritt",
- Fig. 3: eine schematische Seitenansicht des Luftausströmers gemäß Fig-1 in der Betriebsstellung "Diffuser Luftaustritt",
- Fig. 4: eine schematische Vorderansicht des in Fig.3 dargestellten Luftausströmers in der Betriebsstellung "Diffuser Luftaustritt",
- Fig. 5: eine schematische Seitenansicht eines alternativen Luftausströmers mit einem längs aufgeschnitten dargestellten Luftkanal und flexiblen Luftleitefementen, die in Ihrer äußeren Lagerung drehbar gelagert und innen an der Längsachse des Luftausströmers fixiert sind, wobei sie sich in der Betriebsstellung "Spotförmiger Luftaustritt" befinden,
- Fig. 6: eine schematische Vorderansicht des in Fig-5 dargestellten Luftausströmers in der Betriebsstellung "spotförmiger Luftaustritt",
- Fig. 7: eine schematische Seitenansicht des Luftausströmers gemäß Fig.5 in der Betriebsstellung "Diffuser Luftaustritt",
- Fig. 8: eine schematische Vorderansicht des in Fig.5 dargestellten Luftausströmers in der Betriebsstellung "Diffuser Luftaustritt",
- Fig. 9: eine schematische Ansicht eines weiteren alternativen Luftausströmers mit einem quer aufgeschnitten dargestellten Luftkanal und steifen, deltaförmigen Luftleitelementen, die jeweils um eine Achse drehbar gelagert sind, wobei sie sich in der Betriebsstellung "Spotförmiger Luftaustritt" befinden,
- Fig. 10: eine schematische Vorderansicht des in Fig 9 dargestellten Luftausströmers in der Betriebsstellung "spotförmiger Luftaustritt",
- Fig. 11: eine schematische Seitenansicht des Luftausströmers gemäß Fig.9 in der Betriebsstellung "Diffuser Luftaustritt",
- Fig. 12: eine schematische Vorderansicht des in Fig.9 dargestellten Luftausströmers in der Betriebsstellung "Diffuser Luftaustritt",
- Fig. 13: eine schematische Ansicht eines alternativen Luftausströmers mit einem quer aufgeschnitten dargestellten Luftkanal und steifen Luftleitelementen, die jeweils um eine Achse drehbar gelagert sind und deltaförmige und halbdeltaförmige Teilflächen umfassen, wobei sie sich in der Betriebsstellung "Spotförmiger Luftaustritt" befinden,
- Fig. 14: eine schematische Vorderansicht des in Fig.13 dargestellten Luftausströmers in der Betriebsstellung "spotförmiger Luftaustritt",
- Fig. 15: eine schematische Seitenansicht des Luftausströmers gemäß Fig.13 in der Betriebsstellung "Diffuser Luftaustritt",
- Fig. 16: eine schematische Vorderansicht des in Fig.13 dargestellten Luftausströmers in der Betriebsstellung "Diffuser Luftaustritt",
- Fig. 17: einen schematischen Querschnitt eines Luftausströmers mit zwei ineinander angeordneten Luftkanälen,
- Fig. 18: einen schematischen Längsschnitt des Luftausströmers aus Figur 17,
- Fig. 19: einen schematischen Querschnitt des Luftausströmers aus Figur 17 mit einer "scharfer Spot" genannten Charakteristik der Luftausströmung,
- Fig. 20: einen schematischen Querschnitt des Luftausströmers aus Figur 17 mit einer "Spot" genannten Charakteristik der Luftausströmung,
- Fig. 21: einen schematischen Querschnitt des Luftausströmers aus Figur 17 mit einer "diffus mit Gegendrall" genannten Charakteristik der Luftausströmung, und
- Fig. 22: einen schematischen Querschnitt des Luftausströmers aus Figur 17 mit einer "Spot-diffus" genannten Charakteristik der Luftausströmung.

Einander entsprechende Teile sind in allen Figuren mit den gleichen Bezugszeichen versehen.

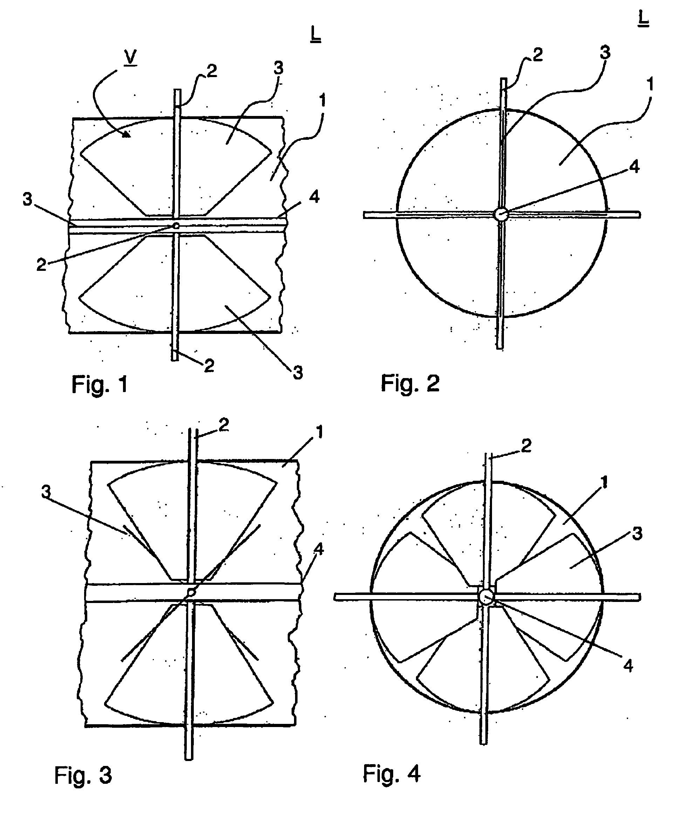

In Figur 1 ist eine Ausführungsform für einen Luftausströmer L gezeigt, der in einem Luftkanal 1 mit kreisförmigem Querschnitt eine aus jeweils um eine zugehörige Achse 2 drehbaren Luftleitelementen 3 bestehende Vorrichtung V zur Beeinflussung der Luftströmung umfasst.

Die Achsen 2 der Luftleitelemente 3 stehen dabei in radialer Position auf der Längsachse 4 des Luftkanals 1. Die Luftleitelemente 3 sind in Art von Klappen, beispielsweise Umlenkklappen, ausgeführt und separat und insbesondere synchron mit gleichem Drehsinn um die jeweils zugehörige Achse 2 schwenkbar. In der dargestellten Ausführungsform umfasst die Vorrichtung V zur Beeinflussung der Luftströmung vier Luftleitelemente 3. Je nach Art und Größe des Luftkanals 1 kann eine entsprechende Anzahl von Luftleitelementen 3 je Vorrichtung V vorgesehen sein. Auch können in Strömungsrichtung gesehen mehrere Vorrichtungen V oder einzelne oder mehrere Luftleitelemente 3 hintereinander im Luftkanal angeordnet sein. Die den hintereinander angeordneten Luftleitelementen zugeordneten Achsen 2 können hierbei auch radial zueinander versetzt sein. Entlang der Achse 2 ist ein Zentralkörper 5, beispielsweise ein Rohr vorgesehen, welcher der Aufnahme beziehungsweise Lagerung der Luftleitelemente 3 dient.

Der Luftausströmer L dient in Art einer Düse in dem in einen Fahrzeuginnenraum mündenden Luftkanal 1 der Zuführung von Luft zur Klimatisierung des Fahrzeuginnenraums. Um einen möglichst guten Klimakomfort im Fahrzeuginnenraum zu erzielen, sind die Luftleitelemente 3 zwischen zwei Endstellungen in eine beliebige Zwischenstellung stellbar. Dabei können die Zwischen- oder Endstellungen einen vorgegebenen Betriebsfall darstellen.

Nachfolgend wird die Erfindung für den Betriebsfall "Spotförmiger Luftaustritt" für eine schnelle Klimatisierung, z. B. eine schnelle Kühlung, und den Betriebsfall "Diffuser Luftaustritt" für eine angenehme Klimatisierung ohne Luftzugerscheinungen näher erläutert.

In den Figuren 1 und 2 sind die dargestellten Luftleitelemente 3 in Hauptströmungsrichtung ausgerichtet. Hierdurch wird der durch den Luftkanal 1 geführte Luftstrom durch sie nicht beeinflusst. D.h. die Luftieftelemente 3 stehen in Betriebsstellung "Spotförmiger Luftaustritt".

In den Figuren 3 und 4 sind die Luftleitelemente 3 synchron um ihre Achsen 2 gedreht, so dass der Luftstrom mit Drall behaftet wird und sich ein starker Wirbel bildet, der am Austritt des Luftausströmers L aufplatzt. D.h. die Luftleitelemente 3 werden in die Betriebsstellung "Diffuser Luftaustritt" gedreht. Durch entsprechende Formgebung der Luftleitelemente 3 kann die Vorrichtung V so gestaltet werden, dass der Luftkanal 1 durch maximales Anstellen der Luftleitelemente 3 in eine Endstellung verschließbar ist, so dass der Luftstrom ganz unterbrochen ist. Je nach Vorgabe können die Luftleitelemente 3 auch in eine beliebige Zwischenstellung zwischen den Betriebsfällen "Spotförmiger Luftaustritt" und "Diffuser Luftaustritt" gebracht werden, wobei diese Zwischenstellung wiederum einen vorgegebenen Betriebsfall darstellen kann.

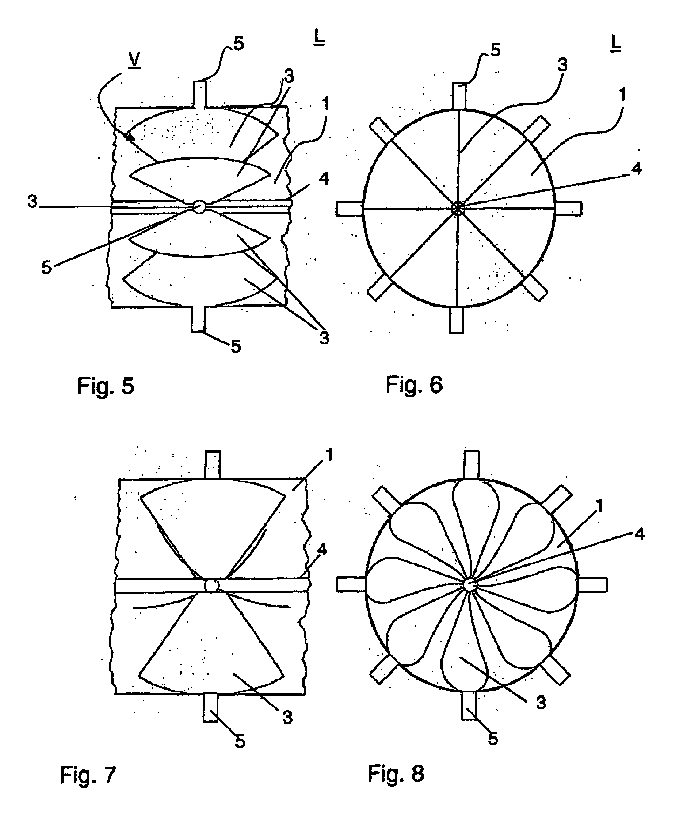

In Figur 5 ist eine weitere Ausführungsform für einen Luftausströmer L gezeigt. Der Luftkanal 1 weist ebenfalls einen kreisförmigen Querschnitt auf. Die Vorrichtung V zur Beeinflussung der Luftströmung ist aus einer Anzahl von flexiblen, in ihrer äußeren Lagerung drehbar gelagerten, an der Längsachse 4 und/oder einem dafür vorgesehenen Zentralkörper des Luftkanals 1 jedoch fixierten Luftleitelementen 3 gebildet. Unter flexiblen Luftleitelementen 3 werden insbesondere Klappen aus einem besonders flexiblen Material, z. B. aus Federstahl, einem dünnen Blech oder einem Kunststoff, verstanden. Ein derartiges flexibles Material ermöglicht, dass die Luftleitelemente 3 beim Durchströmen des Luftkanals 1 durch mechanische Beanspruchung bzw. durch vorgegebenes Drehen der Luftleitelemente 3 in vorgegebener Art und Weise, insbesondere um deren Achsen 2 verwunden werden, so dass sich eine gewünschte Strömungscharakteristik einstellt. Die Achsen 2 der äußeren Lagerung 5 der Luftleitelemente 3 stehen dabei in radialer Position auf der Längsachse 4 des Luftkanals 1.

In den Figuren 5 und 6 sind die Luftleitelemente 3 nicht verwunden in "Ruhestellung". Dabei sind die Luftleitelemente 3 in Hauptströmungsrichtung ausgerichtet, so dass der Luftstrom durch sie nicht beeinflusst wird. D.h. die Luftleitelemente 3 stehen in Betriebsstellung "Spotförmiger Luftaustritt".

In den Figuren 7 und 8 sind die Luftleitelemente 3 in ihren äußeren Lagerungen synchron gedreht und damit verwunden. D.h. die Luftieftelemente 3 sind in die Betriebsstellung "Diffuser Luftaustritt" gebracht. Dabei wird die Luftströmung mit einem Drall beaufschlagt, wodurch sich insbesondere ein Wirbel ausbildet, der am Austritt aufplatzt und so zu einem diffusen Luftaustritt führt.

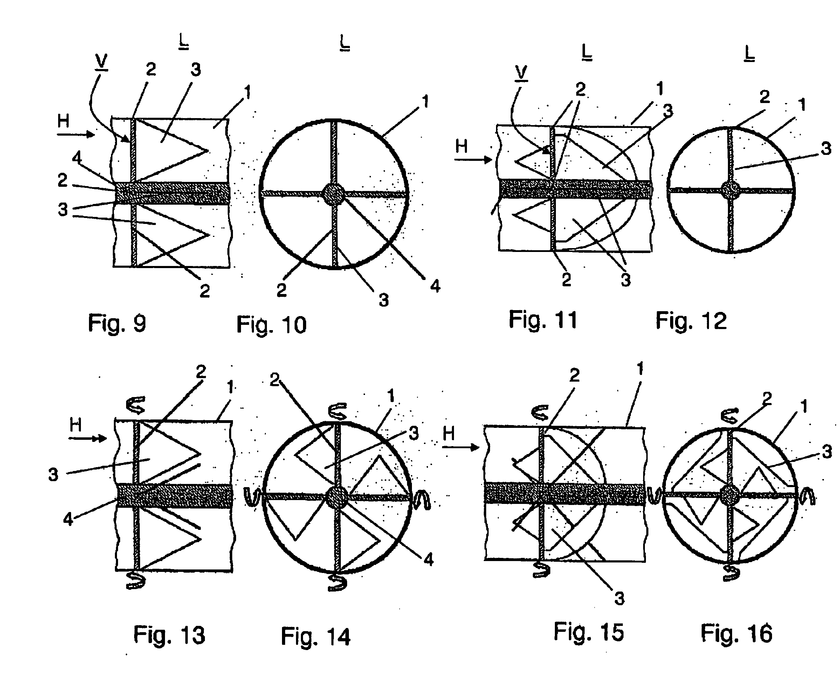

In Figur 9 ist eine weitere alternative Ausführungsform für einen Luftausströmer L gezeigt. Im kreisförmigen Luftkanal 1 ist eine Vorrichtung V zur Beeinflussung der Luftströmung angeordnet, die aus einer Anzahl von steifen, jeweils um eine zugehörige Achse 2 drehbaren Luftleitelementen 3 gebildet ist. Die Luftleitelemente 3 sind deltaförmig ausgeführt. Unter einem deltaförmigen Luftleitelement 3 werden insbesondere dreiecksförmige Klappen oder Wirbelgeneratoren verstanden. Die Achsen 2 der Luftleitelemente 3 stehen dabei in radialer Position auf der Längsachse 4 des Luftkanals 1 und sind an einem Zentralkörper 5 befestigt.

In den Figuren 9 und 10 sind die Luftleitelemente 3 in Hauptströmungsrichtung H ausgerichtet. Hierdurch wird der durch den Luftkanal 1 geführte Luftstrom nicht beeinflusst. D.h. die Luftleitelemente 3 stehen in Betriebsstellung "Spotförmiger Luftaustritt". In den Figuren 11 und 12 sind die Luftleitelemente 3 bezüglich der Hauptströmungsrichtung H synchron um ihre Achsen 2 gedreht und befinden sich damit in der Betriebsstellung "Diffuser Luftaustritt". Durch kontrollierte Ablösung entstehen an den schrägen Vorderkanten des jeweiligen Luftleitelements 3 Längswirbel, die abhängig vom Anstellwinkel nach einer gewissen Lauflänge aufplatzen und so neben erzeugtem Drall durch verstärkten Impulsaustausch zu einer Auffächerung des Strahls beitragen.

Die in Figur 13 gezeigte weitere alternative Ausführungsform für einen Luftausströmer L weist eine Vorrichtung V zur Beeinflussung der Luftströmung ähnlich der in Figur 9 gezeigten auf. Die Luftleitelemente 3 sind hierbei in Hauptströmungsrichtung H halbdeltaförmig und in der Gegenrichtung deltaförmig ausgebildet. In den Figuren 13 und 14 sind die Luftleftelemente 3 in Hauptströmungsrichtung H ausgerichtet, so dass der Luftstrom durch sie nicht beeinflusst wird. D.h. die Luftleitelemente 3 stehen in Betriebsstellung "Spotförmiger Luftaustritt". In den Figuren 15 und 16 sind die Luftleitelemente 3 bezüglich der Hauptstromrichtung H synchron um ihre Achsen 2 gedreht und in einer derartigen Endstellung gebracht, dass die halbdeltaförmigen Teile der Luftleitelemente 3 an der Innenwandung des Luftkanals 1 anliegen. Die Luftleitelemente 3 befinden sich damit in der Betriebsstellung "Diffuser Luftaustritt". Verglichen mit der in den Figuren 9 bis 12 gezeigten Ausführungsform lässt sich die Drallerzeugung bzw. Wirbelbildung so zusätzlich verbessern.

Darüber hinaus kann der Luftkanal 1 in allen Ausführungsformen alternativ zu dem gezeigten kreisförmigen Querschnitt auch eine andere geometrische Querschnittsform, z.B. eine Rechteckform, aufweisen. Bei der flexiblen Luftleitelementen 3 kommen entsprechend weiche und/oder elastische Kunststoffe, Gummi oder dünner Federstahl zum Einsatz.

Darüber hinaus kann der in verschiedenen Ausführungsformen gezeigte Luftausströmer L mittels eines Kugelgelenks oder einer kardanischen Aufhängung schwenkbar gelagert werden.

In einer weiteren Ausführungsform des Verfahrens können die Luftwirbel und/oder Drall durch Injektion tangentialer Luftströmungen in den Luftkanal 1 generiert werden. Hierzu wird in den Luftkanal 1 in nicht näher dargestellter Art und Weise zusätzlich Luft tangential eingeführt, so dass der im Luftkanal 1 bereits geführte Luftstrom in eine Drallbewegung versetzt wird.

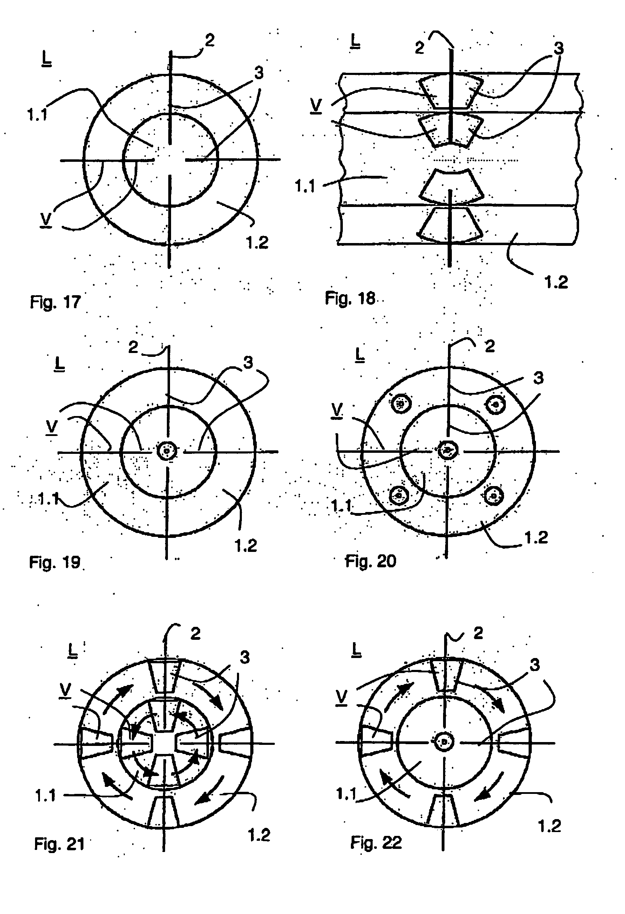

Figur 17 zeigt eine andere Ausführungsform eines Luftausströmers L, bei dem ein innerer Luftkanal 1.1 in einem äußeren Luftkanal 1.2 angeordnet ist. Die hydraulischen Durchmesser der Luftkanäle 1.1, 1.2 sind einander gleich. Die Querschnitte beider Luftkanäle 1.1, 1.2 sind kreisförmig. Jeder der beiden Luftkanäle 1.1, 1.2 verfügt über eine eigene Vorrichtung V zur Beeinflussung der Luftströmung, die von der des jeweils anderen Luftkanals 1.2, 1.1 unabhängig verstellbar ist. Die Vorrichtung umfasst jeweils vier Luftleitelemente 3, die um je eine zugehörige Achse 2 drehbar sind. Miteinander fluchtende Achsen 2 von Luftleitelementen 3 verschiedener Luftkanäle 1-1, 1.2 stecken beispielsweise ineinander. Figur 18 zeigt den selben Luftausströmer L in einer Längsschnittansicht.

Die Figuren 19 bis 22 zeigen Betriebsfälle des Luftausströmers L aus Figur 17. Ein gerichteter, strahlförmiger Luftaustritt eines der Luftkanäle 1.1, 1.2 wird dabei durch zwei ineinander angeordnete Kreise, ein diffuser und mit einem Drall behafteter Luftaustritt hingegen mit einem gekrümmten Pfeil symbolisiert. Eine Kombination dieser Betriebsfälle der einzelnen Luftkanäle 1.1, 1.2 ergibt eine jeweils unterschiedliche Gesamtcharakteristik der Luftausströmung.

In Figur 19 wird nur der innere Luftkanal 1.1 mit einem Luftstrom beaufschlagt. Die Luftleitelemente 3 nehmen eine Position ein, in der sie den Luftstrom nicht beeinträchtigen. Infolgedessen strömt die Luft aus dem Luftausströmer L strahlförmig und gerichtet aus. Die Charakteristik der Luftströmung wird "scharfer Spot" genannt.

In Figur 20 werden beide Luftkanäle 1.1, 1.2 mit Luft beaufschlagt. Die Luftleitelemente 3 beider Luftkanäle 1.1, 1.2 nehmen jeweils eine Position ein, in der sie den Luftstrom nicht beeinträchtigen. Infolgedessen strömt die Luft aus dem Luftausströmer L strahlförmig und gerichtet aus Die Charakteristik der Luftströmung wird "Spot" genannt und ist weniger scharf, dafür mit höherem Durchsatz ausgeprägt als in Figur 19. Der äußere Luftkanal 1.2 kann so als Bypass genutzt werden um Druckverluste zu senken.

In Figur 21 werden beide Luftkanäle 1.1, 1.2 mit Luft beaufschlagt. Die Luftleitelemente 3 beider Luftkanäle 1.1, 1.2 nehmen jeweils eine Position ein, in der sie den Luftstrom verdrallen, und zwar so dass der Drehsinn der Verdrallung des äußeren Luftkanals 1.2 dem des inneren Luftkanals 1-1 entgegen gerichtet ist. Infolgedessen strömt die Luft aus dem Luftausströmer L besonders diffus aus. Die Charakteristik der Luftströmung wird "diffus mit Gegendrall" genannt.

In Figur 22 werden beide Luftkanäle 1.1, 1.2 mit Luft beaufschlagt. Die Luftleitelemente 3 des äußeren Luftkanals 1.2 nehmen eine Position ein, in der sie den Luftstrom verdrallen, die des inneren Luftkanals 1.1 beeinträchtigen den Luftstrom hingegen nicht. Infolgedessen strömt die Luft aus dem Luftausströmer L mit einer Charakteristik zwischen "spotförmig" und diffus aus, d.h. ein spotförmiger Luftstrahl ist von einer diffusen Luftausströmung umgeben. Die Charakteristik der Luftströmung wird "Spot-diffus" genannt.

Weitere Charakteristiken der Luftausströmung sind durch eine beliebige Kombination der Betriebsfälle der Luftkanäle 1.1, 1.2 einstellbar. Luftkanäle 1.1, 1.2 und Luftleitelemente 3 können eine von der gezeigten abweichende Form aufweisen.

Auch der in den Figuren 17 bis 22 gezeigte Luftausströmer kann schwenkbar ausgeführt sein. Ebenso können flexible und/oder verwindbare Luftleitelemente 3 verwendet werden. Bei Verwendung steifer Luftleitelemente 3 kommen vorzugsweise Kunststoff oder Blech zum Einsatz, bei Verwendung flexibler Luftleitelemente 3 entsprechend weiche und/oder elastische Kunststoffe, Gummi oder dünner Federstahl.
In einer weiteren Ausführungsform des Verfahrens können die Luftwirbel und/oder Drall durch Injektion tangentialer Luftströmungen in die Luftkanäle 1.1, 1.2 generiert werden.

## Patentansprüche

1. Luftausströmer (L), umfassend einen Luftkanal (1) und mindestens eine Vorrichtung (V) zur Beeinflussung der Luftströmung, wobei die Vorrichtung (V) derart ausgestaltet ist, dass sie in einem ersten Betriebsfall einen gerichteten, strahlförmigen Luftaustritt und in einem zweiten Betriebsfall einen diffusen Luftaustritt und stetig verstellbar alle zwischen diesen beiden Betriebsfällen liegenden Betriebsfälle ermöglicht, wobei in allen Betriebsfällen ein gemeinsamer Querschnitt des Luftkanals (1) durchströmbar ist und die Vorrichtung (V) mehrere um jeweils eine zugehörige Achse (2) drehbar gelagerte Luftleitelemente (3) umfasst **dadurch gekennzeichnet, dass** die Luftleitelemente (3) aus flexiblem Material bestehen, derart, dass die Luftleitelemente (3) zur Verstellung der Vorrichtung (V) verwunden werden können.

2. Luftausströmer (L) nach Anspruch 1, **dadurch gekennzeichnet, dass** der Querschnitt des Luftkanals (1) eine Kreisform oder eine andere geometrische Form, insbesondere Rechteckform aufweist.

3. Luftausströmer (L) nach einem der Ansprüche 1 oder 2, **dadurch gekennzeichnet, dass** die Vorrichtung (V) den diffusen Luftaustritt durch Generierung von Luftwirbeln und deren Aufplatzen am Austritt oder nach einer vorgegebenen Lauflänge erzeugt.

4. Luftausströmer (L) nach einem der Ansprüche 1 bis 3, **dadurch gekennzeichnet, dass** die Vorrichtung (V) den diffusen Luftaustritt durch kontrolliert erzeugten Drall erzeugt.

5. Luftausströmer (L) nach einem der Ansprüche 1 bis 4, **dadurch gekennzeichnet, dass** die zu den jeweiligen Luftleitelementen (3) zugehörigen Achsen (2) in einer gemeinsamen Querschnittsebene des Luftkanals (1) liegen.

6. Luftausströmer (L) nach einem der Ansprüche 1 bis 5, **dadurch gekennzeichnet, dass** die Luftleitelemente (3) deltaförmig sind.

7. Luftausströmer (L) nach einem der Ansprüche 1 bis 6, **dadurch gekennzeichnet, dass** die Luftleitelemente (3) jeweils einen deltaförmigen und einen halbdeltaförmigen Teil umfassen.

8. Luftausströmer (L) nach einem der Ansprüche 1 bis 7, **dadurch gekennzeichnet, dass** die Vorrichtung (V) mehrere flexible, in ihrer äußeren Lagerung (5) drehbar gelagerte und auf diese Weise verwindbare Luftleitelemente (3) umfasst, die an einer in Richtung des Luftstroms liegenden Längsachse (4) des Luftkanals (1) fixiert sind.

9. Verfahren zur Steuerung einer Luftausströmung eines Luftausströmers nach einem der Ansprüche 1 bis 8, **dadurch gekennzeichnet, dass** mittels mindestens einer Vorrichtung (V) zur Beeinflussung der Luftströmung diese in einem ersten Betriebsfall mit einem gerichteten, strahlförmigen Luftaustritt und in einem zweiten Betriebsfall mit einem diffusen Luftaustritt in einen Fahrzeuginnenraum geführt wird, wobei die Vorrichtung (V) stetig in weitere zwischen diesen beiden Betriebsfällen liegende Betriebsfälle stellbar ist und die Luftströmung in allen Betriebsfällen durch einen gemeinsamen Querschnitt des Luftkanals (1) geführt wird, wobei die Luftleitelemente (3) zur Verstellung der Vorrichtung (V) verwunden werden.

10. Luftausströmer (L) nach einem der Ansprüche 1 bis 8, umfassend mindestens einen zweiten Luftkanal (1.1 bis 1.n) mit mindestens einer zweiten Vorrichtung (V) zur Beeinflussung einer Luftströmung, wobei die Vorrichtung (V) derart ausgestaltet ist, dass sie in einem ersten Betriebsfall einen gerichteten, strahlförmigen Luftaustritt und in einem zweiten Betriebsfall einen diffusen Luftaustritt und stetig verstellbar alle zwischen diesen beiden Betriebsfällen liegenden Betriebsfälle an dem ihr zugehörigen Luftkanal ermöglicht, wobei mindestens einer der Luftkanäle (1.1 bis 1.n-1) in einem anderen der Luftkanäle (1.2 bis 1.n) angeordnet ist.

11. Luftausströmer nach Anspruch 10, **dadurch gekennzeichnet, dass** der hydraulische Querschnitt mindestens eines der Luftkanäle (1.1 bis 1.n-1) dem hydraulischen Querschnitt des Luftkanals (1.2 bis 1.n) gleich ist, in dem er angeordnet ist.

12. Luftausströmer (L) nach einem der Ansprüche 10 bis 11, **dadurch gekennzeichnet, dass** die Vorrichtungen (V) zur Beeinflussung einer Luftströmung unabhängig voneinander verstellbar sind.

13. Luftausströmer (L) nach einem der Ansprüche 10 bis 12, **dadurch gekennzeichnet, dass** die zumindest zweite Vorrichtung (V) den diffusen Luftaustritt durch Generierung von Luftwirbeln und deren Aufplatzen am Austritt oder nach einer vorgegebenen Lauflänge erzeugt.

14. Luftausströmer (L) nach einem der Ansprüche 10 bis 13, **dadurch gekennzeichnet, dass** die zumindest zweite Vorrichtung (V) den diffusen Luftaustritt durch kontrolliert erzeugten Drall erzeugt.

15. Luftausströmer (L) nach einem der Ansprüche 10 bis 14, **dadurch gekennzeichnet, dass** die zumindest zweite Vorrichtung (V) mehrere um jeweils eine zugehörige Achse (2) drehbar gelagerte Luftleitelemente (3) umfasst.

16. Luftausströmer (L) nach Anspruch 15, **dadurch gekennzeichnet, dass** die zu den jeweiligen Luftleitelementen (3) der zumindest zweiten Vorrichtung (V) zugehörigen Achsen (2) in einer gemeinsamen Querschnittsebene des Luftkanals (1) liegen.

17. Luftausströmer (L) nach einem der Ansprüche 15 oder 16, **dadurch gekennzeichnet, dass** die Luftleitelemente (3) der zumindest zweiten Vorrichtung (V) deltaförmig sind.

18. Luftausströmer (L) nach einem der Ansprüche 15 oder 16, **dadurch gekennzeichnet, dass** die Luftleitelemente (3) der zumindest zweiten Vorrichtung (V) jeweils einen deltaförmigen und einen halbdeltaförmigen Teil umfassen.

19. Luftausströmer (L) nach einem der Ansprüche 15 bis 18, **dadurch gekennzeichnet, dass** die Luftleitelemente (3) der zumindest zweiten Vorrichtung (V) aus flexiblem Material bestehen.

20. Luftausströmer (L) nach einem der Ansprüche 10 bis 14, **dadurch gekennzeichnet, dass** die zumindest zweite Vorrichtung (V) mehrere flexible, in ihrer äußeren Lagerung (5) drehbar gelagerte und auf diese Weise verwindbare Luftleitelemente (3) umfasst, die an einer in Richtung des Luftstroms liegenden Längsachse (4) des Luftkanals (1.1) oder an einem der anderen, innerhalb angeordneten Luftkanäle (1.1 bis 1.n-1) fixiert sind.

21. Luftausströmer (L) nach einem der Ansprüche 1 bis 8 oder 10 bis 20, **gekennzeichnet durch** eine schwenkbare Lagerung.

22. Verfahren zur Steuerung einer Luftausströmung eines Luftausströmers mit einem inneren Luftkanal (1.1), der in mindestens einem äußeren Luftkanal (1.2 bis 1.n) angeordnet ist, bei dem mittels jeweils mindestens einer Vorrichtung (V) zur Beeinflussung der Luftströmung pro Luftkanal (1.1 bis 1.n) die Luftströmung in jedem der Luftkanäle (1.1 bis 1.n) in einem ersten Betriebsfall mit einem gerichteten, strahlförmigen Luftaustritt und in einem zweiten Betriebsfall mit einem diffusen Luftaustritt in einen Fahrzeuginnenraum geführt wird, wobei die Vorrichtung (V) stetig in weitere zwischen diesen beiden Betriebsfällen liegende Betriebsfälle stellbar ist und die Vorrichtungen (V) der Luftkanäle (1.1 bis 1.n) unabhängig voneinander verstellt werden können, **dadurch gekennzeichnet, dass** zur Verstellung zumindest einer Vorrichtung (V) zur Beeinflussung der Luftströmung drehbar angeordnete, flexible, Luftleitelemente (3) verwunden werden.

23. Verfahren nach Anspruch 22, **dadurch gekennzeichnet, dass** nur dem inneren Luftkanal (1.1), der in dem äußeren Luftkanal (1.2) angeordnet ist, Luft zugeführt und die Luftströmung gerichtet aus diesem ausgeströmt wird.

24. Verfahren nach Anspruch 23, **dadurch gekennzeichnet, dass** die Luftströmung aus dem inneren Luftkanal (1.1) gerichtet und aus dem äußeren Luftkanal (1.2) diffus ausgeströmt wird.

25. Verfahren nach Anspruch 23, **dadurch gekennzeichnet, dass** nur dem äußeren Luftkanal (1.2) Luft zugeführt und die Luftströmung diffus aus diesem ausgeströmt wird.

26. Verfahren nach Anspruch 23, **dadurch gekennzeichnet, dass** die Luftströmung aus dem inneren Luftkanal (1.1) und aus dem äußeren Luftkanal (1.2) diffus und mit einem gleichsinnigen Drall behaftet ausgeströmt wird.

27. Verfahren nach Anspruch 23, **dadurch gekennzeichnet, dass** die Luftströmung aus dem inneren Luftkanal (1.1) und aus dem äußeren Luftkanal (1.2) diffus und mit einem gegensinnigen Drall behaftet ausgeströmt wird.

28. Verfahren nach Anspruch 23, **dadurch gekennzeichnet, dass** die Luftströmung aus dem inneren Luftkanal (1.1) und aus dem äußeren Luftkanal (1.2) direkt ausgeströmt wird.

29. Belüftungssystem für ein Fahrzeug, **gekennzeichnet durch** einen Luftausströmer (L) nach einem der Ansprüche Ansprüche 1 bis 8 oder 10 bis 21.

## Claims

1. Air outlet (L) comprising an air duct (1) and at least one device (V) for influencing the air flow, wherein the device (V) is designed such that it allows in a first operating case a directed, jet-like air discharge and in a second operating case a diffuse air discharge as well as allowing, in an infinitely variable manner, for any operating cases lying between these two operating cases, wherein the air can in all operating cases flow through a common cross-section of the air duct (1) and wherein the device (V) comprises a plurality of air guidance elements (3), each mounted to rotate about an associated axis (2), **characterised in that** the air guidance elements (3) are made of a flexible material, so that the air guidance elements (3) can be twisted to adjust the device (V).

2. Air outlet (L) according to claim 1, **characterised in that** the cross-section of the air duct (1) has a circular shape or another geometrical shape, in particular a rectangular shape.

3. Air outlet (L) according to claim 1 or 2, **characterised in that** the device (V) generates the diffuse air discharge by generating air vortices which burst at the outlet or after a preset run length.

4. Air outlet (L) according to any of claims 1 to 3, **characterised in that** the device (V) generates the diffuse air discharge by means of a controlled swirl.

5. Air outlet (L) according to any of claims 1 to 4, **characterised in that** the axes (2) assigned to the respective air guidance elements (3) lie in a common cross-sectional plane of the air duct (1).

6. Air outlet (L) according to any of claims 1 to 5, **characterised in that** the air guidance elements (3) are deltoid.

7. Air outlet (L) according to any of claims 1 to 6, **characterised in that** each of the air guidance elements (3) comprises a deltoid and a semi-deltoid portion.

8. Air outlet (L) according to any of claims 1 to 7, **characterised in that** the device (V) comprises a plurality of flexible air guidance elements (3) rotatably mounted in their external mounting and therefore twistable, which are fixed to a longitudinal axis (4) of the air duct (1) lying in the direction of the air flow.

9. Method for controlling an air discharge of an air outlet according to any of claims 1 to 8, **characterised in that**, by means of at least one device (V) for influencing the air flow, the air is fed into a vehicle interior with a directed, jet-like air discharge in a first operating case and with a diffuse air discharge in a second operating case, wherein the device (V) is infinitely variable for further operating cases between these two operating cases, and wherein the air flow is guided through a common cross-section of the air duct (1) in all operating cases, the air guidance elements (3) being twisted to adjust the device (V).

10. Air outlet (L) according to any of claims 1 to 8, comprising at least a second air duct (1.1 to 1.n) with at least one second device (V) for influencing an air flow, wherein the device (V) is designed such that it allows in a first operating case a directed, jet-like air discharge and in a second operating case a diffuse air discharge as well as allowing, in an infinitely variable manner, for any operating cases lying between these two operating cases, at least one of the air ducts (1.1 to 1.n-1) being located in another of the air ducts (1.2 to 1.n).

11. Air outlet according to claim 10, **characterised in that** the hydraulic cross-section of at least one of the air ducts (1.1 to 1.n-1) is equal to the hydraulic cross-section of the air duct (1.2 to 1.n) in which it is located.

12. Air outlet according to claim 10 or 11, **characterised in that** the devices (V) for influencing the air flow are independently adjustable.

13. Air outlet (L) according to any of claims 10 to 12, **characterised in that** the at least second device (V) generates the diffuse air discharge by generating air vortices which burst at the outlet or after a preset run length.

14. Air outlet (L) according to any of claims 10 to 13, **characterised in that** the at least second device (V) generates the diffuse air discharge by means of a controlled swirl.

15. Air outlet (L) according to any of claims 10 to 14, **characterised in that** the at least second device (V) comprises a plurality of air guidance elements (3), each mounted to rotate about an associated axis (2).

16. Air outlet (L) according to claim 15, **characterised in that** the axes (2) assigned to the respective air guidance elements (3) of the at least second device (V) lie in a common cross-sectional plane of the air duct (1).

17. Air outlet (L) according to claim 15 or 16, **characterised in that** the air guidance elements (3) of the at least second device (V) are deltoid.

18. Air outlet (L) according to claim 15 or 16, **characterised in that** each of the air guidance elements (3) of the at least second device (V) comprises a deltoid and a semi-deltoid portion.

19. Air outlet according to any of claims 15 to 18, **characterised in that** the air guidance elements (3) of the at least second device (V) are made of a flexible material.

20. Air outlet (L) according to any of claims 10 to 14, **characterised in that** the at least second device (V) comprises a plurality of flexible air guidance elements (3) rotatably mounted in their external mounting and therefore twistable, which are fixed to a longitudinal axis (4) of the air duct (1.1) lying in the direction of the air flow or to one of the other inside air ducts (1.1 to 1.n-1).

21. Air outlet (L) according to any of claims 1 to 8 or 10 to 20, **characterised by** a pivotable mounting.

22. Method for controlling an air discharge of an air outlet with an inner air duct (1.1) disposed in at least one outer air duct (1.2 to 1.n), wherein by means of at least one device (V) each for influencing the air flow per air duct (1.1 to 1.n), the air is in each of the air ducts (1.1 to 1.n) fed into a vehicle interior with a directed, jet-like air discharge in a first operating case and with a diffuse air discharge in a second operating case, wherein the device (V) is infinitely variable for further operating cases between these two operating cases and wherein the devices (V) of the air ducts (1.1 to 1.n) are independently adjustable, **characterised in that** rotatably mounted, flexible air guidance elements (3) are twisted to adjust at least one device for influencing the air flow (V).

23. Method according to claim 22, **characterised in that** air is fed only to the inner air duct (1.1) located in the outer air duct (1.2), and **in that** a directed air flow is discharged therefrom.

24. Method according to claim 23, **characterised in that** the air discharged from the inner air duct (1.1) is directed and the air discharged from the outer air duct (1.2) is diffuse.

25. Method according to claim 23, **characterised in that** air is fed only to the outer air duct (1.2) and **in that** a diffuse air flow is discharged therefrom.

26. Method according to claim 23, **characterised in that** the air discharged from the inner air duct (1.1) and from the outer air duct (1.2) is diffuse and subject to an equidirectional swirl.

27. Method according to claim 23, **characterised in that** the air discharged from the inner air duct (1.1) and from the outer air duct (1.2) is diffuse and subject to an opposite swirl.

28. Method according to claim 23, **characterised in that** the air is discharged directly from the inner air duct (1.1) and from the outer air duct (1.2).

29. Ventilation system for a vehicle, **characterised by** an air outlet (L) according to any of claims 1 to 8 or 10 to 21.

## Revendications

1. Diffuseur d'air (L) comprenant un conduit d'air (1) et au moins un dispositif (V) servant à influencer l'écoulement de l'air, où le dispositif (V) est configuré de manière telle, qu'il permette, dans un premier cas de fonctionnement, une sortie d'air dirigé en forme de jet et, dans un deuxième cas de fonctionnement, une sortie d'air diffus, et qu'il permette, de façon constamment réglable, tous les cas de fonctionnement se trouvant entre ces deux cas de fonctionnement où, dans tous les cas de fonctionnement, une section commune du conduit d'air (1) peut être traversée, et le dispositif (V) comprend plusieurs éléments déflecteurs d'air (3) montés en rotation à chaque fois autour d'un axe correspondant (2),
**caractérisé en ce que** les éléments déflecteurs d'air (3) sont réalisés dans un matériau flexible, de manière telle que les éléments déflecteurs d'air (3) puissent être déformés en torsion pour le réglage du dispositif (V).

2. Diffuseur d'air (L) selon la revendication 1, **caractérisé en ce que** la section du conduit d'air (1) présente une forme circulaire ou une autre forme géométrique, en particulier une forme rectangulaire.

3. Diffuseur d'air (L) selon l'une des revendications 1 ou 2, **caractérisé en ce que** le dispositif (V) produit la sortie d'air diffus, par génération de tourbillons d'air et par leur éclatement au niveau de la sortie, ou bien après une longueur de parcours prédéterminée.

4. Diffuseur d'air (L) selon l'une quelconque des revendications 1 à 3, **caractérisé en ce que** le dispositif (V) produit la sortie d'air diffus par un mouvement circulaire obtenu de manière contrôlée.

5. Diffuseur d'air (L) selon l'une quelconque des revendications 1 à 4, **caractérisé en ce que** les axes (2) associés aux éléments déflecteurs d'air respectifs (3) se trouvent dans un plan de section commun du conduit d'air (1).

6. Diffuseur d'air (L) selon l'une quelconque des revendications 1 à 5, **caractérisé en ce que** les éléments déflecteurs d'air (3) sont en forme de delta.

7. Diffuseur d'air (L) selon l'une quelconque des revendications 1 à 6, **caractérisé en ce que** les éléments déflecteurs d'air (3) comprennent à chaque fois une partie en forme de delta et une partie en forme de demi-delta.

8. Diffuseur d'air (L) selon l'une quelconque des revendications 1 à 7, **caractérisé en ce que** le dispositif (V) comprend plusieurs éléments déflecteurs d'air flexibles (3), montés en rotation dans leur logement extérieur (5) et, de cette manière, déformables en torsion, éléments déflecteurs d'air qui sont fixés sur un axe longitudinal (4) du conduit d'air (1) se trouvant en direction du flux d'air.

9. Procédé de commande d'un écoulement d'air d'un diffuseur d'air selon l'une quelconque des revendications 1 à 8, **caractérisé en ce que**, au moyen au moins d'un dispositif (V) servant à influencer l'écoulement de l'air, celui-ci est guidé dans l'habitacle d'un véhicule automobile, dans un premier cas de fonctionnement, avec une sortie d'air dirigé en forme de jet et, dans un deuxième cas de fonctionnement, avec une sortie d'air diffus, où le dispositif (V) est constamment réglable dans d'autres cas de fonctionnement se trouvant entre ces deux cas de fonctionnement et, dans tous les cas de fonctionnement, l'écoulement de l'air est guidé à travers une section commune du conduit d'air (1), où les éléments déflecteurs d'air (3) sont déformés en torsion pour le réglage du dispositif (V).

10. Diffuseur d'air (L) selon l'une quelconque des revendications 1 à 8, comprenant au moins un deuxième conduit d'air (1.1 à 1.n) comportant au moins un deuxième dispositif (V) servant à influencer un écoulement d'air, où le dispositif (V) est configuré de manière telle, qu'il permette, dans un premier cas de fonctionnement, une sortie d'air dirigé en forme de jet et, dans un deuxième cas de fonctionnement, une sortie d'air diffus, et que, de façon constamment réglable, il permette, sur le conduit d'air associé audit dispositif, tous les cas de fonctionnement se trouvant entre ces deux cas de fonctionnement, où au moins l'un des conduits d'air (1.1 à 1.n-1) est disposé dans un autre des conduits d'air (1.2 à 1.n).

11. Diffuseur d'air (L) selon la revendication 10, **caractérisé en ce que** la section hydraulique d'au moins l'un des conduits d'air (1.1 à 1.n-1) est identique à la section hydraulique du conduit d'air (1.2 à 1.n) dans lequel le diffuseur d'air est disposé.

12. Diffuseur d'air (L) selon l'une des revendications 10 ou 11, **caractérisé en ce que** les dispositifs (V) servant à influencer un écoulement de l'air sont réglables indépendamment les uns des autres.

13. Diffuseur d'air (L) selon l'une quelconque des revendications 10 à 12, **caractérisé en ce qu'**au moins le deuxième dispositif (V) produit la sortie d'air diffus, par génération de tourbillons d'air et par leur éclatement au niveau de la sortie, ou bien après une longueur de parcours prédéterminée.

14. Diffuseur d'air (L) selon l'une quelconque des revendications 10 à 13, **caractérisé en ce qu'**au moins le deuxième dispositif (V) produit la sortie d'air diffus par un mouvement circulaire obtenu de manière contrôlée.

15. Diffuseur d'air (L) selon l'une quelconque des revendications 10 à 14, **caractérisé en ce qu'**au moins le deuxième dispositif (V) comprend plusieurs éléments déflecteurs d'air (3) montés en rotation à chaque fois autour d'un axe correspondant (2).

16. Diffuseur d'air (L) selon la revendication 15, **caractérisé en ce que** les axes (2) correspondant aux éléments déflecteurs d'air respectifs (3) d'au moins le deuxième dispositif (V) se trouvent dans un plan de section commun du conduit d'air (1).

17. Diffuseur d'air (L) selon l'une des revendications 15 ou 16, **caractérisé en ce que** les éléments déflecteurs d'air (3) d'au moins le deuxième dispositif (V) sont en forme de delta.

18. Diffuseur d'air (L) selon l'une des revendications 15 ou 16, **caractérisé en ce que** les éléments déflecteurs d'air (3) d'au moins le deuxième dispositif (V) comprennent à chaque fois une partie en forme de delta et une partie en forme de demi-delta.

19. Diffuseur d'air (L) selon l'une quelconque des revendications 15 à 18, **caractérisé en ce que** les éléments déflecteurs d'air (3) d'au moins le deuxième dispositif (V) sont réalisés dans un matériau flexible.

20. Diffuseur d'air (L) selon l'une quelconque des revendications 10 à 14, **caractérisé en ce qu'**au moins le deuxième dispositif (V) comprend plusieurs éléments déflecteurs d'air flexibles (3) montés en rotation dans leur logement extérieur (5) et, de cette manière, déformables en torsion, éléments déflecteurs d'air qui sont fixés sur un axe longitudinal (4) du conduit d'air (1.1) se trouvant en direction du flux d'air, ou bien sur l'un des autres conduits d'air (1.1 à 1.n-1) disposés à l'intérieur.

21. Diffuseur d'air (L) selon l'une quelconque des revendications 1 à 8 ou 10 à 20, **caractérisé par** un logement pivotant.

22. Procédé de commande d'un écoulement d'air d'un diffuseur d'air comprenant un conduit d'air intérieur (1.1) qui est disposé dans au moins un conduit d'air extérieur (1.2 à 1.n), procédé dans lequel, au moyen à chaque fois d'au moins un dispositif (V) servant à influencer l'écoulement de l'air concernant chaque conduit d'air (1.1 à 1.n), l'écoulement de l'air, dans l'habitacle d'un véhicule automobile, est guidé dans chacun des conduits d'air (1.1 à 1.n), dans un premier cas de fonctionnement, avec une sortie d'air dirigé en forme de jet et, dans un deuxième cas de fonctionnement, avec une sortie d'air diffus, où le dispositif (V) est constamment réglable dans d'autres cas de fonctionnement se trouvant entre ces deux cas de fonctionnement, et les dispositifs (V) des conduits d'air (1.1 à 1.n) peuvent être réglés indépendamment les uns des autres, **caractérisé en ce que**, pour le réglage d'au moins un dispositif (V) servant à influencer l'écoulement de l'air, des éléments déflecteurs d'air flexibles (3), montés en rotation, sont déformés en torsion.

23. Procédé selon la revendication 22, **caractérisé en ce que** de l'air est fourni seulement au conduit d'air intérieur (1.1) qui est disposé dans le conduit d'air extérieur (1.2), et l'écoulement de l'air est réalisé de façon dirigée à partir de ce conduit d'air extérieur.

24. Procédé selon la revendication 23, **caractérisé en ce que** l'écoulement de l'air est réalisé de façon dirigée à partir du conduit d'air intérieur (1.1) et de manière diffuse à partir du conduit d'air extérieur (1.2).

25. Procédé selon la revendication 23, **caractérisé en ce que** de l'air est fourni seulement au conduit d'air extérieur (1.2), et l'écoulement de l'air est réalisé de manière diffuse à partir de ce conduit d'air extérieur.

26. Procédé selon la revendication 23, **caractérisé en ce que** l'écoulement de l'air est réalisé de manière diffuse et avec un mouvement circulaire dirigé dans le même sens, à partir du conduit d'air intérieur (1.1) et à partir du conduit d'air extérieur (1.2).

27. Procédé selon la revendication 23, **caractérisé en ce que** l'écoulement de l'air est réalisé de manière diffuse et avec un mouvement circulaire dirigé en sens inverse, à partir du conduit d'air intérieur (1.1) et à partir du conduit d'air extérieur (1.2).

28. Procédé selon la revendication 23, **caractérisé en ce que** l'écoulement de l'air est réalisé directement à partir du conduit d'air intérieur (1.1) et à partir du conduit d'air extérieur (1.2).

29. Système de ventilation pour un véhicule automobile, **caractérisé par** un diffuseur d'air (L) selon l'une quelconque des revendications 1 à 8 ou 10 à 21.
